# EUROPÄISCHE PATENTANMELDUNG

(11) **EP 0 749 798 A1**
(43) Veröffentlichungstag der Anmeldung: **27.12.1996**
(21) Anmeldenummer: 96109764.9
(22) Anmeldetag: 18.06.1996
(51) Int. Cl.: B23D 61/18

(54) **Diamantsägeseil**

(30) Priorität: 22.06.1995 DE 19522655; 02.05.1996 DE 29507970 U
(71) Anmelder: Hillmaier, Hubert, 82467 Garmisch-Partenkirchen (DE)
(72) Erfinder: Hillmaier, Hubert, 82467 Garmisch-Partenkirchen (DE)

(57) **Zusammenfassung**

Das Diamantsägeseil eignet sich zum Schneiden von Beton, Naturstein und gesteinsähnlichen Materialien. Die Einsatzgebiete sind der Hoch- und Tiefbau, der Bergwerksbau und die Natursteinverarbeitung.

Bei dem neuen Diamantsägeseil werden einfache diamantbesetzte Ringe hergestellt und anschließend werden diese mit einem harten Kunststoff direkt auf dem Seil befestigt. Das Diamantpulvergemisch besteht aus einem reinen Kobaltpulver mit einem Diamantanteil von ca. 10 Gew.%.

Der harte Kunststoff (2) befindet sich nur in unmittelbarer Umgebung des Diamantrings (3), um die Flexibilität des Seils zu gewähren. Der dabei entstehende Zwischenraum wird anschließend mit einem elastischen Kunststoff (4) aufgefüllt.

Der harte Kunststoff (2) für die Perlenfixierung ist ein Polyurethan mit 50% Glasfaseranteil und einem E-Modul von 12000 N/mm², der im thermoplastischen Spritzgußverfahren aufgebracht wird. Die Form der Perienummantellung weist an den Seiten je eine Dichtlippe auf, die eine bessere Verbindung zwischen dem harten und weichen Kunststoff gewährleisten soll.

Der elastische Kunstoff (4), der die Seil flexibilität des Seils gewährleistet, ist ein Polyurethan mit einer Shorehärte von 80A und wird in einem zweiten Arbeitsgang ebenfalls im thermoplastischen Spritzgußverfahren aufgebracht. Dessen Außenkontur weist sechs drallförmige Erhebungen auf, die entlang der Seilachse verlaufen.

## Beschreibung

### Technisches Gebiet, auf das sich die Erfindung bezieht:

Die Erfindung betrifft ein Diamantsägeseil, das beim Zersägen von gesteinsartigen Materialien verwendet wird.

Diamantsägeseile werden hauptsächlich im Hoch- und Tiefbau, in Bergwerken, in Steinbrüchen und auf stationären Maschinen in der Bearbeitung von gesteinsartigen Materialien verwendet.

Im Hoch- und Tiefbau werden mit Diamantsägeseilen armierte bzw. nicht armierte Betonmauern, Ziegelmauern oder Bruchsteinmauern geschnitten. Aber auch Stahlkonstruktionen wurden schon mit Diamantsägeseilen zersägt.

In Bergwerken und Steinbrüchen wird das Diamantsägeseil überall dort eingesetzt, wo Sprengungen verboten sind oder sie zuviel Schaden anrichten.

Stationäre Seilsägemaschinen finden besonders bei Steinmetzen Verwendung, da sie mit ihnen schwierige Konturen in Granit, Marmor usw. schneiden können.

### Stand der Technik:

Das Diamantsägeseil, besteht aus einem Drahtseil und mehreren abrasiven Schneidelementhülsen, die in einem gleichmäßigen Abstand voneinander getrennt auf einem Drahtseil angeordnet sind.

Um eine gewisse Flexibilität zu behalten, darf das Seil nicht durchgehend mit einer zum Beispiel galvanisch aufgebrachten Diamantbeschichtung versehen sein, da dieses bei einer Umlenkung an einer Seilsägemaschine, d.h. einer stetigen Beanspruchung auf Biegung, zerstört werden würde. Deshalb weisen derartige Sägeseile eine in Abständen angeordnete Diamantbeschichtung auf. Dies wird im allgemeinen durch auf das Seil aufgeschobene, diamantbeschichtete Schneidringe bzw. Schneidperlen bewerkstelligt. Diese diamantbeschichteten Schneidelemente bestehen fast ausschließlich aus einem metallischen Grundkörper, auf dem entweder eine mit Diamanten versetzte Sinterschicht aufgesintert wird oder die Diamanten in einem galvanischen Verfahren, befestigt werden.

Der Zwischenraum zwischen den Schneidperlen wird durch Abstandhülsen, einzelne Abstützfedern, eine elastische Kunststoffumhüllung des Drahtseils oder eine Kombination aus Abstützfedern und Kunststoffumfüllung erreicht.

Die Verwendung eines Sägeseils mit Kunststoffabstandhaltern auf dem Drahtseil zwischen den einzelnen Schneidelementen hat gegenüber der Anordnung von Spiralfedern als Zwischenglieder zwischen den Schneidelementen den Vorteil, daß ein außerordentlich ruhiger Rundlauf des Sägeseils im Betrieb gewährleistet ist. Hierfür kann die Ummantelung in ihrem Außendurchmesser nahtlos sich dem Außendurchmesser der Schneidperle anpassen, wobei eine gleichmäßige Abnutzung des Außendurchmessers und damit ein gleichbleibender Rundlauf des Schneidrings gewährleistet ist. Dies ist mit einer Bestückung von Schraubenfedern bzw. Drahtspiralen als Zwischenglieder nicht ohne weiteres möglich. Der Vorteil von Schraubenfedern bzw. Drahtspiralen als Abstandhalter ist der, daß die Schneidhülsen durch die Federkraft auch nach einer leichten Verschiebung der Schneidhülse immer wieder in ihre Ausgangsposition gebracht werden. Teilweise werden die Schneidelemente aufgequetscht, d.h. durch mechanische Verformung auf das Drahtseil aufgeklemmt, was zu einer Beschädigung des Drahtseils und damit zu einem vorzeitigen Verschleiß bzw. Bruch des Seils führen kann.
(Fundstellen: DE 24 51 153 C2; DE 31 48 065 A1; DE 40 38 480 A1)

### Zu lösende technische Aufgabe:

Gegenstand der Erfindung ist, ein Diamantsägeseil zu gestalten, bei dem einfache ohne abgesetzte Metallüberstände gesinterde Schneidelemente verwendet werden können, die auf dem Drahtseil ähnlich gut haften, wie direkt aufgequetschte Schneidelemente, aber deren oben genannten Nachteile nicht aufweisen. Außerdem soll das Diamantsägeseil einen ähnlich guten Drahtseilschutz aufweisen, wie bei den Seilen mit Kunststoff- oder Kautschukabstandhaltern.

### Darstellung der Erfindung:

Erfindungsgemäß wird dies bei einem Diamantsägeseil des obigen Typs dadurch erreicht, daß das gesinterte Schneidelement mit einem harten thermoplastischen Kunststoff auf dem Trägerseil befestigt und der Abstand zwischem den Perlen mit einem weichen verbundfähigen thermoplastischen Kunststoff hergestellt wird.

### Vorteilhafte Wirkungen der Erfindung:

Das erfindungsgemäße Diamantsägeseil weist verschiedene Vorteile auf, die wie folgt lauten:
1. Durch das Aufbringen der Kunststoffe in einem thermoplastischen Spritzgußverfahren werden auch Hohlräume von weniger 0,01 mm³ ausgefüllt. Dadurch entsteht eine äußerst wirksame mechanische Verankerung mit dem Trägerseil.
2. Der harte Kunststoff, der das Diamant-Schleifelement umgibt bewirk, daß während des Betriebes nur die Schneidfläche des Diamantschleifelements herausschaut und dadurch Beschädigungen, die durch das Verkanten des Schleifelementes während des Einsatzes entstehen, vermieden werden.
3. Bei der Herstellung der Diamantschleifelemente, kann auf einen langen metallischen Trägerkörper verzichtet werden, der aufgrund seiner Starrheit bei starken Biegungen Schäden am Seil verursachen kann.
4. Bei der Herstellung von einfachen Diamantschleifringen im Sinterverfahren kann auf Rohlinge (Vorpreßteile) und Nacharbeiten am metallischen Trägerteil verzichtet werden.
5. Dadurch, daß der Außendurchmesser der Abstandhalter annähernd dem der Diamantschleifelemente ist, wird eine erhöhte Laufruhe erzielt.

Weitere Einzelheiten und Vorteile der Erfindung sind in den Zeichnungen dargestellt und in der nachfolgenden Beschreibung näher erläutert.

### Beschreibung eines Weges zur Ausführung der Erfindung unter Bezugnahme auf die Zeichnung:

Fig. 1 zeigt einen schematischen Längsschnitt eines Diamantsägeseils.

Fig. 2 zeigt einen schematischen Querschnitt eines Diamantschleifelements.

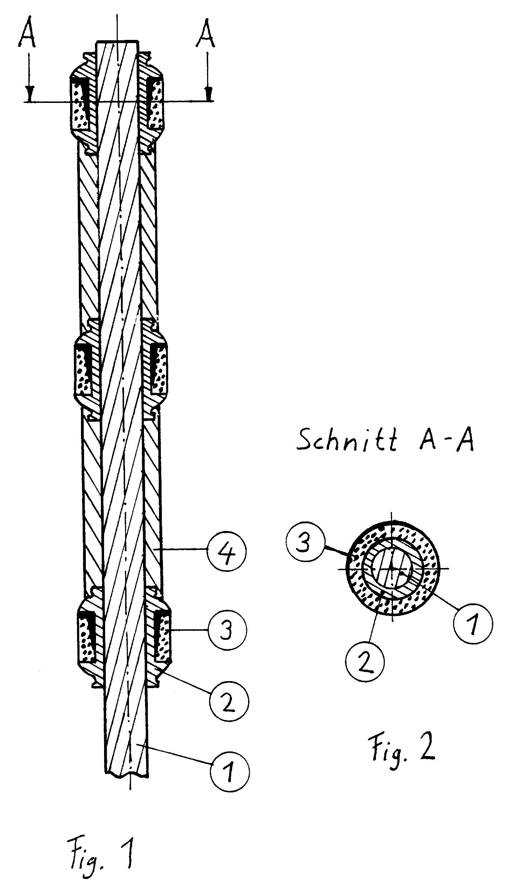

In Fig. 1 sind auf einem Stahlträgerseil(1) mehrere Diamantperlen(3) aufgeschoben und anschließend mit einem glasfaserverstärkten thermoplastischen Kunststoff(2) auf dem Drahtseil befestigt. Der Abstandhalter(4) zwischen den Diamantschleifkörpern ist ein elastischer thermoplastischer Kunststoff. Durch die freie Gestaltungsmöglichkeit der beiden Kunststoffe ist es möglich, eine formschlüssige Verbindung zwischen den Kunststoffen zu erziehlen. Dadurch wird verhindert, daß Gesteinsmehl in das Drahtseil gelangt und es langsam zerstört.

In Fig. 2 schließt der glasfaserverstärkte thermoplastische Kunststoff(2) das Diamantschleifelement(3) bis auf dessen Schleiffläche voll ein und ist auf dem Trägerseil(1) befestigt. Durch das direkte Aufspritzen des Kunststoffs auf das Seil, wird ein fester Sitz des Diamantschleifelements auf dem Drahtseil erreicht.

### Die Bestandteile im Einzelnen:

1. Das Trägerseil(1) ist ein vermessingtes Stahldrahtseil mit einem Durchmesser von 5mm.
2. Das Schneidelement(3) besteht aus einem metallischen Grundkörper und einer gesinterten Diamant-Cobalt-Schicht. Das besondere an diesem Schneidring ist, daß der Innendurchmesser (6mm) größer ist als der Außendurchmesser (5mm) des Trägerseils.
   Der metallische Grundkörper besteht aus einem verkupferten Stahldrehteil. Das Drehteil ist eine Hülse, mit einem Innenduchmesser von 6mm und einem mittleren Außendurchmesser von 8mm, der auf der einen Seite einen 1 mm starken Krempel mit einem Außendurchmesser von 11 mm aufweist und auf der anderen Seite konisch ausläuft. Die Länge des Drehteils beträgt 6mm.
   Das Diamantpulvergemisch besteht aus einem reinen Kobaltpulver mit einem Diamantanteil von ca. 10 Gew.%.
3. Der harte Kunststoff(2) für die Perlenfixierung ist ein Polyurethan mit 50% Glasfaseranteil und einem E-Modul von 12000 N/mm², der im thermoplastischen Spritzgußverfahren aufgebracht wird. Die Form der Perlenummantellung weist an den Seiten je eine Dichtlippe auf, die eine bessere Verbindung zwischen dem harten und weichen Kunststoff gewährleisten soll.
4. Der elastische Kunststoff(4), der die Seil flexibilität des Seils gewährleistet, ist ein Polyurethan mit einer Shorehärte von 80A und wird in einem zweiten Arbeitsgang ebenfalls im thermoplastischen Spritzgußverfahren aufgebracht. Dessen Außenkontur weist sechs drallförmige Erhebungen auf, die entlang der Seilachse verlaufen.

## Patentansprüche

1. Diamantsägeseil, das aus Diamantschleifelementen besteht, die sich auf einem Trägerseil(1) befinden, wird zum Schneiden von gesteinsähnlichen Materialien durch Verschieben parallel zu der zu schneidenden Fläche eingesetzt, wobei das Diamantschleifelement aus einem Ring(3) besteht, dessen Achse mit derjenigen des Trägerseil zusammenfällt,
ist **dadurch gekennzeichnet**, daß der Diamantring(3) auf dem Trägerseil(1) aufgeschoben wird, und anschließend mit einem unverstärkten bzw. verstärkten Kunststoff oder synthetischen Werkstoff(2), der ein höheres E-Modul nach ISO 527 als 500N/mm² aufweist, auf dem Trägerseil direkt befestigt wird.

2. Diamantsägeseil nach Anspruch 1,
ist **dadurch gekennzeichnet**, daß ein Teil des Abstands(4) zwischen den zwei Diamantschleifelementen(3) aus einem Kunststoff oder Kautschuk besteht, der eine geringere Härte als 75 Shore D aufweist, und eine Verbindung, die sowohl mechanisch, molekular oder anderweitig sein kann, zu dem harten Kunststoff, der das Schneidelement umgibt, eingeht.
